# EUROPÄISCHE PATENTSCHRIFT

(11) **EP 1 635 098 B1**
(45) Veröffentlichungstag und Bekanntmachung des Hinweises auf die Patenterteilung: **11.05.2011**
(21) Anmeldenummer: 05108401.0
(22) Anmeldetag: 13.09.2005
(51) Int. Cl.: F16L 1/028, H02G 1/06

(54) **Verfahren und Spülkopf zum Freilegen von im Erdreich verlegten Anlagen**
Method and flushing head for uncovering underground installations
Méthode et tête d'injection pour dégager des installations enterrées

(30) Priorität: 13.09.2004 DE 102004044747
(43) Veröffentlichungstag der Anmeldung: 15.03.2006
(73) Patentinhaber: Hellmann, Ernst, 12277 Berlin (DE); Gottfried Puhlmann GmbH & Co. KG, 14478 Potsdam (DE); Flowtex Service Hamburg Gesellschaft mbH & Co. KG, 21107 Hamburg (DE)
(72) Erfinder: Hellmann, Ernst, 12277 Berlin (DE); Hinrichs, Günter, 22175 Hamburg (DE)
(74) Vertreter: Hengelhaupt, Jürgen

(56) Entgegenhaltungen:
- EP-A- 0 687 048
- DE-A1- 2 252 817
- DE-C1- 19 504 484
- DE-C1- 19 802 691
- DE-U1- 29 823 285
- FR-A- 2 716 751
- GB-A- 976 421
- US-A- 1 887 877
- US-A- 4 923 134
- US-A- 6 129 486

## Beschreibung

Die Erfindung betrifft ein Verfahren zum Freilegen von im Erdreich verlegten Anlagen wie Kabeln oder Rohren und einen Spülkopf, an dessen Vorderseite eine Reihe von Düsen angeordnet ist und an dessen Rückseite ein mit einem Innenkanal versehenes Vortriebsgestänge angreift, mit dem der Spülkopf zwischen einer Startgrube und einer Zielgrube über die freizulegende Anlage vorgetrieben wird.

Ein Spülkopf dieser Art, der zum grabenlosen Entfernen von alten Kabeln dienen soll, ist aus der DE 195 04 484 C1 bekannt. Der Spülkopf umgreift dabei das Kabel. Mit Hilfe der an seiner Vorderseite angeordneten Düsen wird das das Kabel umgebende Erdreich mittels einer Spülflüssigkeit (Bentonit) freigelegt. Der Vortrieb des Spülkopfes erfolgt über ein an seiner Rückseite angesetztes Gestänge. Das Gestänge wird seitlich neben dem Kabel geführt. Die unter Druck stehende Spülflüssigkeit wird durch einen Innenkanal innerhalb des Gestänges zugeführt.

Um den Spülkopf auf das Kabel aufzubringen, wird das Kabel an einer Startgrube sowie einer Zielgrube getrennt. Das Freispülen erfolgt ausgehend von der Startgrube, wobei die Vortriebskraft über das Gestänge aufgebracht wird und die Spülflüssigkeit unter einem Druck von 10 - 300 bar zu den Düsen geführt wird. Unter mehrfacher Verlängerung des Gestänges und ständiger Vortriebskraft wird der Kabelabschnitt freigelegt. In der Zielgrube wird der Spülkopf entfernt, das Gestänge zur Startgrube zurückgezogen und der Kabelabschnitt herausgezogen, wobei gegebenenfalls ein neues Kabel mit eingezogen werden kann.

Das Verfahren soll das grabenlose Bergen und gegebenenfalls Ersetzen von Kabeln erlauben, so dass die sonst nötigen umfangreichen Erdarbeiten vermieden werden. Es hat im praktischen Einsatz jedoch noch einige Nachteile. So kommt es vor, dass in einem kurzen Abstand über dem Kabel verlegte Kabelabdecksteine, wie sie lange Zeit verwendet wurden, durch das Freispülen des zwischen Kabel und Abdecksteinen befindlichen Erdreiches gelockert werden und und auf das Kabel fallen, wobei sie den Vortrieb oder ein eventuelles Zurückziehen des Spülkopfes behindern oder die Beweglichkeit des Vortriebsgestänges beeinträchtigen. Auch das Herausziehen des freigelegten Kabelabschnitts kann erschwert werden. Außerdem wird der Spülkopf beim Vortreiben möglicherweise durch Kabelmuffen oder andere Aufwerfungen, z. B. am Kabel angebrachte Kennungen, die bei alten Kabeln aus Bleibändern bestehen, behindert. Das hat dazu geführt, dass die Bergung eines Kabelabschnitts in einer vorgesehenen Abschnittslänge oftmals nicht erfolgen konnte und eine weitere Zielgrube gesetzt werden musste.

Es hat deshalb nicht an Versuchen gefehlt, das Verfahren weiter zu verbessern. So ist mit der DE 1 002 932 A2 vorgeschlagen worden, zwischen Start- und Zielgrube entlang eines Kabels zunächst mehrere Bohrungen voranzutreiben und den Spülkopf in der Zielgrube an dem Bohrgestänge zu befestigen. Das Freispülen erfolgt dann in einer Rückwärtsbewegung zur Zielgrube. Das Verfahren ist durch das vorangehende Vortreiben mehrerer Bohrungen jedoch sehr aufwändig.

In jüngster Zeit hat es auch Vorschläge gegeben, neben dem Spülkopf ein weiteres Werkzeug, z.B. eine Bohrkrone, vorzusehen, mit dem Fremdkörper in der Umgebung eines Kabels mechanisch zerkleinert werden können (DE 102 11 833 A1) oder den Spülbohrkopf mit einem zusätzlichen Rotationsantrieb zu versehen (DE 100 65 532 C1). Auch durch Änderung der Spülkopfgeometrie (DE 202 18 713 U1) soll das Freilegen eines Kabels verbessert werden.

Zum Entfernen alter Rohrleitungen aus dem Erdreich ist es auch bekannt, von einer Startgrube aus zunächst ein Schutzrohr aus Stahl über den Rohrabschnitt aufzufahren. Das Schutzrohr weist an seine Vorderseite einen Vortriebskopf zur Führung des Schutzrohres auf und wird von hinten mittels einer hydraulisch oder pneumatisch betriebenen, in der Startgrube verbleibenden Ramme oder Presse vorgetrieben. Schutzrohr und Vortriebskopf sind fest miteinander verschweißt. Zusätzlich können am Vortriebskopf Mittel vorgesehen sein, mit denen der Raum zwischen dem Schutzrohr und der Rohrleitung hinter dem Vortriebskopf freigespült werden kann. Das Verfahren ist aber aufwändig und erfordert große Start- und Zielgruben, will man nicht sehr kurze Schutzrohrabschnitte verwenden, die alle zusammengeschweißt werden müssen. Im vorliegenden Verfahren soll deshalb auf das Spülbohrverfahren zurückgegriffen werden.

Der Erfindung liegt die Aufgabe zugrunde, ein Verfahren und einen für dessen Durchführung geeigneten Spülkopf anzugeben, mit dem im Erdreich verlegte Anlagen in größeren Abschnitten freigespült und, sofern das beabsichtigt ist, ohne Beeinträchtigungen geborgen werden können.

Erfindungsgemäß wird die Aufgabe gelöst durch die Merkmale der Ansprüche 1 und 5. Zweckmäßige Ausgestaltungen sind Gegenstand der Unteransprüche.

Danach wird beim Vortrieb des Spülkopfes ein über mindestens eine Klemmeinrichtung am Spülkopf angeklemmtes Schutzrohr mitgezogen.

Ein entsprechender Spülkopf ist dazu so ausgebildet, dass er an seiner Rückseite mindestens eine Klemmeinrichtung für ein mitzuziehendes Schutzrohr aufweist.

Zweckmäßig ist am Spülkopf eine Innenhülse vorgesehen, auf die das Schutzrohr aufgesteckt werden kann. Die Klemmeinrichtung besteht zweckmäßig aus einer Konus-Keil-Einrichtung.

Das Schutzrohr kann als Endlosmaterial oder auch als zu verschweißende Teilrohre (Kunststoff oder Stahl) vorliegen.

Als ein weiteres erfindungsgemäßes Merkmal kann vorgesehen sein, dass an der Vorderseite des Spülkopfes im Bereich seines inneren Umfangs am Umfang verteilte, beweglich gelagerte Rollen oder Kugeln angeordnet sind, mit denen der Spülkopf auf eventuelle Hindernisse an einer freizulegenden Anlage auffahren kann.

Mit dem Verfahren lassen sich bestehende, erdverlegte Anlagen wie Kabel, Rohre u. ä. verschiedener Leitungsverwaltungen ohne die bisher aufgetretenen Beeinträchtigungen grabenlos freilegen und darüber hinaus mit nachfolgend genannter Zielsetzung ummanteln:
1. unmittelbares Bergen von Leitungen nach der Ummantelung, z.B. bei bautechnisch schwierig auszuführenden Baumaßnahmen, beispielsweise in Bereichen geschützter Baumbestände
2. Späteres Bergen von Leitungen nach der Ummantelung
3. Schutzrohr nach der Leitungsbergung ziehen
4. Verbleib des Schutzrohres für eine spätere Leitungsbelegung
5. Schutzrohr nach Bergung einer Altanlage unmittelbar mit einer Neuanlage, z. B. einem weiteres Schutzrohr, einer Druckrohrleitung etc. belegen
6. Gewährleisten eines zusätzlichen Schutzes bei intakten oder beschädigten Leitungen
7. Gewährleisten einer zusätzlichen Abdichtung bei unter Druck stehenden Leitungen, z.B. Gas- oder Wasserleitungen

Die Erfindung soll nachstehend anhand eines Ausführungsbeispiels näher erläutert werden. Die zugehörige Zeichnung zeigt einen erfindungsgemäßen Spülkopf in einer Querschnittsdarstellung.

Der Spülkopf besteht aus einem Düsenträger 1 und einem Anschlusselement 2, die durch Schweißnähte 3 und 4 miteinander verbunden sind. Durch eine jeweils ringförmige Ausnehmung im Düsenträger 1 und im Anschlusselement 2 entsteht ein Ringkanal 5, der über Bohrungen 6 mit Düsen 7 in Verbindung steht, die den Austritt eines Spülmittels an konischen Innenflächen 8 des Düsenträgers 1 erlauben.

Düsenträger 1 und Anschlusselement 2 sind ringförmig ausgebildet, so dass sich ein Durchgangskanal 9 bildet, mit dem der Spülkopf über eine hier nicht gezeigte Leitung bewegt wird. Zum Aufbringen der Vortriebskraft ist ein Gestänge 10 vorgesehen das mit dem Anschlusselement 2 verschraubt wird. Das Gestänge 10 hat einen Längskanal, über den das Spülmittel zugeführt wird.

Um beim Spülbohren ein Schutzrohr 11 in den freigespülten Kanal mit einziehen zu können, ist das Anschlusselement 2 mit einer Klemmvorrichtung versehen, die aus einem Konus 12 und einem Keilstück 13 besteht, das von einer Gewindeschraube 14 auf den Konus 12 aufgeschoben wird. Das Schutzrohr 11 , das zuvor auf eine Innenhülse 15 aufgeschoben wurde, wird mit dem Konus 12 zwischen der Innenhülse 15 und der Innenfläche des Anschlusselements 2 festgeklemmt. Die Innenhülse 15 wird nach dem Aufbringen des Schutzrohres 11 an dem Düsenträger 1 befestigt. Gegebenenfalls können mehrere, am Umfang des Anschlusselements 2 verteilte Klemmeinrichtungen vorgesehen sein.

In Höhe des Durchgangskanals 9 trägt die Innenhülse 15 im Abstand von ca. 7 cm am Umfang verteilte, bewegliche Rollen 16 (oder auch Kugeln), mit denen der Spülkopf auf Hindernisse, z.B. um ein Kabel herum gewickelte Kennungsbänder, auffahren kann, ohne hängen zu bleiben.

Wird der Spülkopf beispielsweise zum Bergen einer Altleitung benutzt, so wird in bewährter Weise eine Startgrube und im Abstand von etwa 100 Meter eine Zielgrube ausgehoben und die Altleitung in diesen Gruben getrennt. Zu der Startgrube wird ein steifes Führungsrohr (Material z.B. Stahl) zur Führung des Gestänges 10 unter einem festgelegten Winkel zur Oberfläche des Geländes eingebaut, der einen vom Gestänge 10 abhängigen Biegeradius zum Erreichen der Waagerechten berücksichtigt. In der Startgrube wird der Spülkopf einschließlich des angeklemmten Schutzrohres 11 (Durchmesser etwa 80 mm bis 1000 mm) über die zu bergende Altleitung geführt und im Spülbohrverfahren vorgetrieben. Die Altleitung dient hierbei als Führung und das Gestänge 10 zum Aufbringen der Vortriebskraft sowie zum Befördern des Spülmittels. Über und innerhalb des Schutzrohres 11 wird das unter Druck eingebrachte, überschüssige Gemisch aus verdrängtem Boden- und Stützmaterial in Richtung der Startgrube ausgespült, dort aufgefangen und gemäß den gesetzlichen Bestimmungen verwertet oder entsorgt. Nach Ankunft des Spülkopfes in der Zielgrube wird dieser vom Gestänge 10 demontiert. Das Gestänge 10 wird in Richtung der Startgrube zurückgezogen. Anschließend kann der Altleitungsabschnitt herausgezogen werden. Während des Spülvorganges außerhalb des Schutzrohres 11 auftretende Ereignisse, z.B. das Herabfallen von Steinen, Kabelabdecksteinen o.ä., können das spätere Herausziehen einer Leitung oder anderer Anlagen nicht beeinträchtigen, da sie durch das Schutzrohr 11 aufgehalten werden. Darüber hinaus kann das Schutzrohr 11 auch die oben erwähnten Funktionen übernehmen.

Das Herausziehen der Altleitung kann erforderlichenfalls mit dem Einziehen einer neuen Leitung verbunden werden. Das Schutzrohr 11 kann nach den jeweiligen Erfordernissen verbleiben oder es wird anschließend entfernt.

Das Schutzrohr kann aus HDPE, PVC, Stahl oder einem anderen, längskraftschlüssig verbindbaren Rohr bestehen.

Liste der Bezugszeichen
- 1: Düsenträger
- 2: Anschlusselement
- 3: Schweißnaht
- 4: Schweißnaht
- 5: Ringkanal
- 6: Bohrungen
- 7: Düsen
- 8: Innenfläche
- 9: Durchgangskanal
- 10: Gestänge
- 11: Schutzrohr
- 12: Konus
- 13: Keilstück
- 14: Gewindeschraube
- 15: Innenhülse
- 16: Rollen

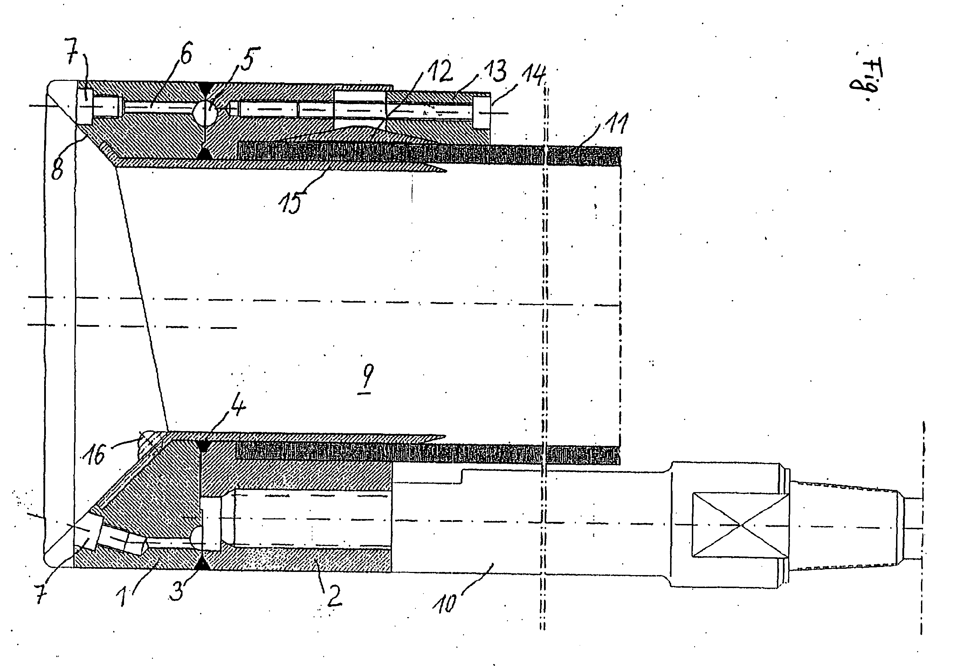

## Patentansprüche

1. Verfahren zum Freilegen von im Erdreich verlegten Anlagen wie Kabeln oder Rohren mit einem Spülkopf, an dessen Vorderseite eine Reihe von Düsen (7) angeordnet ist und an dessen Rückseite ein mit einem Innenkanal versehenes Vortriebsgestänge (10) angreift, mit dem der Spülkopf zwischen einer Startgrube und einer Zielgrube über die freizulegende Anlage vorgetrieben wird,
**dadurch gekennzeichnet, dass**
beim Vortrieb des Spülkopfes ein über mindestens eine Klemmeinrichtung (12,13) am Spülkopf angeklemmtes Schutzrohr (11) mitgezogen wird.

2. Verfahren nach Anspruch 1, **dadurch gekennzeichnet, dass**
das Schutzrohr (11) auf eine Innenhülse (15) des Spülkopfes aufgesteckt und mit der mindestens einen Klemmeinrichtung (12,13) abgeklemmt wird.

3. Verfahren nach Anspruch 1 oder 2, **dadurch gekennzeichnet, dass**
als Schutzrohr (11) Rohrenden verwendet werden, die im Verlauf des Spülbohrens miteinander verschweißt werden.

4. Verfahren nach Anspruch 1 oder 2, **dadurch gekennzeichnet, dass**
als Schutzrohr (11) ein Endlosrohr verwendet wird.

5. Spülkopf zum Freilegen von im Erdreich verlegten Anlagen wie Kabeln oder Rohren, an dessen Vorderseite eine Reihe von Düsen (7) angeordnet ist und an dessen Rückseite ein mit einem Innenkanal versehenes Vortriebsgestänge (10) angreifen kann, mit dem der Spülkopf zwischen einer Startgrube und einer Zielgrube über die freizulegende Anlage vortreibbar ist, zur Durchführung des Verfahren nach einem der vorhergehenden Ansprüche, **dadurch gekennzeichnet, dass**
der Spülkopf an seiner Rückseite mindestens eine Klemmeinrichtung (12,13) aufweist, an der beim Betrieb des Spülkopfes ein mitzuziehendes Schutzrohr (11) befestigbar ist.

6. Kombination eines Spülkopfs nach Anspruch 5 mit einem Schutzrohr, **dadurch gekennzeichnet, dass**
das Schutzrohr (11) auf eine Innenhülse (15) aufsteckbar und mit der mindestens einen Klemmeinrichtung verklemmbar ist.

7. Spülkopf nach Anspruch 5 oder 6, **dadurch gekennzeichnet, dass**
die Klemmeinrichtung aus einer Konus-Keil-Einrichtung (12, 13) besteht.

8. Spülkopf nach einem der Ansprüche 5 bis 7, **dadurch gekennzeichnet, dass**
an seiner Vorderseite im Bereich seines inneren Umfangs (8) am Umfang verteilte beweglich gelagerte Rollen (16) oder Kugeln angeordnet sind.

9. Kombination eines Spülkopfs nach einem der Ansprüche 5 bis 8 mit einem Schutzrohr, **dadurch gekennzeichnet, dass**
das Schutzrohr (11) flexibel ist.

10. Kombination eines Spülkopfs nach einem der Ansprüche 5 bis 9 mit einem Schutzrohr, **dadurch gekennzeichnet, dass**
das Schutzrohr (11) aus Kunststoff besteht.

11. Kombination eines Spülkopfs nach einem der Ansprüche 5 bis 10 mit einem Schutzrohr, **dadurch gekennzeichnet, dass**
das Schutzrohr (11) als Endlosmaterial vorliegt.

12. Kombination eines Spülkopfs nach einem der Ansprüche 5 bis 10 mit einem Schutzrohr, **dadurch gekennzeichnet, dass**
das Schutzrohr (11) als zu verschweißende Teilrohre vorliegt.

## Claims

1. Method for uncovering underground installations like cables or pipes with a flushing head at the front side of which a row of nozzles (7) is disposed and on the back side of which acts an advancing rod system (10) provided with an inner channel, by which the flushing head is advanced over the installation to be uncovered between a starting pit and a target pit,
**characterised in that**
in advancing the flushing head a protective pipe (11) clamped by at least one clamping device (12, 13) to the flushing head is entrained.

2. Method according to claim 1, **characterised in that**
the protective pipe (11) is mounted onto an inner sleeve (15) of the flushing head and is clamped with the at least one clamping device (12, 13).

3. Method according to claim 1 or 2, **characterised in that**
pipe ends are used as the protective pipe (11) which are welded together in the course of the flush drilling.

4. Method according to claim 1 or 2, **characterised in that**
a continuous pipe is used as the protective pipe (11).

5. Flushing head for uncovering underground installations like cables or pipes at the front side of which a row of nozzles (7) is disposed and on the backside of which can act an advancing rod system (10) provided with an inner channel, by which the flushing head can be advanced over the installation to be uncovered between a starting pit and a target pit for performing the method according to one of the preceding claims, **characterised in that**
the flushing head comprises at least one clamping device (12, 13) at the back side thereof to which a protective pipe (11) to be entrained can be attached when the flushing head operates.

6. Combination of a flushing head according to claim 5 with a protective pipe, **characterised in that**
the protective pipe (11) is mountable onto an inner sleeve (15) and is clampable with the at least one clamping device.

7. Flushing head according to claim 5 or 6, **characterised in that**
the clamping device consists of a conical wedge device (12, 13).

8. Flushing head according to one of claims 5 to 7, **characterised in that**,
at the front side of the flushing head in the area of the inner perimeter (8) thereof, movably mounted rollers (16) or balls distributed at the perimeter are disposed.

9. Combination of a flushing head according to one of claims 5 to 8 with a protective pipe, **characterised in that**
the protective pipe (11) is flexible.

10. Combination of a flushing head according to one of claims 5 to 9 with a protective pipe, **characterised in that**
the protective pipe (11) consists of plastic.

11. Combination of a flushing head according to one of claims 5 to 10 with a protective pipe (11), **characterised in that**
the protective pipe (11) is present as a continuous material.

12. Combination of a flushing head according to one of claims 5 to 10 with a protective pipe, **characterised in that**
the protective pipe (11) is present as partial tubes which are to be welded.

## Revendications

1. Méthode pour dégager des installations enterrées, comme des câbles ou des tuyaux, par une tête d'injection à la face avant de laquelle est disposée une série de buses (7), et sur la face arrière de laquelle agit une tringlerie (10) d'avancement muni d'un canal interne, par laquelle la tête d'injection est avancée par l'installation à dégager entre une fouille de départ et une fouille d'arrivée,
**caractérisée en ce que**
un tuyau (11) de protection fixé à la tête d'injection par au moins un dispositif (12,13) de serrage est entraîné lors de l'avancement de la tête d'injection.

2. Méthode selon la revendication 1, **caractérisée en ce que**
le tuyau (11) de protection est attaché sur une douille (15) intérieure de la tête d'injection et fixé à l'au moins un dispositif (12, 13) de serrage.

3. Méthode selon la revendication 1 ou 2, **caractérisée en ce que**
des extrémités de tuyau sont utilisées comme des tuyaux (11) de protection, qui sont soudées les unes aux autres au cours du forage d'injection.

4. Méthode selon la revendication 1 ou 2, **caractérisée en ce que**
un tuyau continu est utilisé comme tuyau (11) de protection.

5. Tête d'injection pour dégager des installations enterrées, comme des câbles ou des tuyaux, à la face avant de laquelle est disposée une série de buses (7), et sur la face arrière de laquelle peut agir une tringlerie (10) d'avancement muni d'un canal interne, par laquelle la tête d'injection peut être avancée par l'installation à dégager entre une fouille de départ et une fouille d'arrivée, pour la réalisation de la méthode selon l'une des revendications précédentes,
**caractérisée en ce que**
la tête d'injection comprend au moins un dispositif (12, 13) de serrage à sa face arrière auquel un tuyau (11) de protection à entraîner est fixé lors du fonctionnement de la tête d'injection.

6. Combinaison d'une tête d'injection selon la revendication 5 avec un tuyau de protection, **caractérisée en ce que**
le tuyau (11) de protection peut être attaché sur une douille (15) intérieure et fixé à l'au moins un dispositif de serrage.

7. Tête d'injection selon la revendication 5 ou 6, **caractérisée en ce que**
le dispositif de serrage consiste en un dispositif (12, 13) de clavette conique.

8. Tête d'injection selon l'une des revendications 5 à 7, **caractérisée en ce qu'**,
à la face avant de la tête d'injection, dans la zone de son périmètre (8) intérieur, sont disposés des rouleaux (16) ou boules montés de manière mobile qui sont repartis sur le périmètre.

9. Combinaison d'une tête d'injection selon l'une des revendications 5 à 8 avec un tuyau de protection, **caractérisée en ce que**
le tuyau (11) de protection est flexible.

10. Combinaison d'une tête d'injection selon l'une des revendications 5 à 9 avec un tuyau de protection, **caractérisée en ce que**
le tuyau (11) de protection est constitué de matière plastique.

11. Combinaison d'une tête d'injection selon l'une des revendications 5 à 10 avec un tuyau de protection, **caractérisée en ce que**
le tuyau (11) de protection est présent en tant que matériau continu.

12. Combinaison d'une tête d'injection selon l'une des revendications 5 à 10, **caractérisée en ce que**
le tuyau (11) de protection est présent en tant que des tuyaux partiels à souder.
